(19) Europäisches Patentamt
European Patent Office
Office européen des brevets

(11) **EP 4 663 462 A1**

(12) **EUROPEAN PATENT APPLICATION**

(43) Date of publication:
**17.12.2025 Bulletin 2025/51**

(21) Application number: **24382625.2**

(22) Date of filing: **10.06.2024**

(51) International Patent Classification (IPC):
**B60L 7/10** *(2006.01)* **B60L 7/26** *(2006.01)*

(52) Cooperative Patent Classification (CPC):
**B60L 7/10; B60L 7/26;** B60L 2240/12;
B60L 2240/16; B60L 2240/80; B60L 2250/16;
B60W 40/09; B60W 2520/105

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Bridgestone Mobility Solutions B.V.
1083 HK Amsterdam (NL)**

(72) Inventors:
• **STASIUK, Michal**
**00-838 Wasaw (PL)**
• **BERNADAS-THURZO, Annamaria**
**08018 Barcelona (ES)**
• **GARCIA, Esteban Avila**
**08018 Barcelona (ES)**
• **VERHEIJEN, Paul Roeland**
**1083 HK Amsterdam (NL)**

(74) Representative: **Dehns
10 Old Bailey
London EC4M 7NG (GB)**

(54) **REGENERATIVE BRAKING DETECTION**

(57)     A computer-implemented method (100) of assessing and/or advising a driver of an electric or hybrid vehicle (1), the method comprising: detecting a series of deceleration events of a data gathering vehicle (1a); during each detected deceleration event, obtaining data indicative of: a power provided to the battery (5) by the regenerative braking system (3), vehicle speed, and vehicle acceleration; and generating a function representing a relationship between the power provided to the battery (5) by the regenerative braking system (3), the speed, and the acceleration; detecting a deceleration event of a monitored vehicle (1b); obtaining data indicative of: a power provided to the battery (5) by the regenerative braking system (3), vehicle speed, and vehicle acceleration; and using the generated function, and the time stamped monitoring data obtained during said deceleration event, to determine whether a driver of the monitored vehicle (1b) has used mechanical braking.

Fig. 3

**Description**

<u>Technical Field</u>

The present invention relates to assessing and/or advising a driver of an electric or hybrid vehicle, in particular to a method of assessing and/or advising a driver of an electric or hybrid vehicle within a fleet comprising one or more vehicles, and a system for assessing and/or advising a driver of an electric or hybrid vehicle within a fleet comprising one or more vehicles.

<u>Background</u>

Electric and hybrid vehicles perform braking in two ways, regenerative braking, and friction braking. Friction braking, which includes but is not limited to the use of conventional braking systems such as disk brakes and drum brakes, results in kinetic energy of the vehicle being converted into heat, and therefore wasted. By contrast, regenerative braking is performed using the electrical resistance of the one or more drive motors (electrical drive unit) of the vehicle. The drive motor being turned by the momentum of the vehicle induces a current which can be used to charge the battery for powering the electrical drive unit (traction battery). As such, it is more energy efficient for a driver of an electric or hybrid vehicle to maximise use of regenerative braking, and minimise use of friction braking, and so methods of assessing and/or advising drivers in relation to regenerative braking have been developed.

Existing methods are developed and calibrated for individual vehicles (e.g. individual vehicle models) based on known and fixed vehicle information such as the maximum braking torque which can be provided by a vehicle's regenerative braking system. As such, there remains a need for a solution which is more adaptable to different vehicles and vehicle specifications.

<u>Summary of the Invention</u>

According to a first aspect of the invention, there is provided a computer-implemented method of assessing and/or advising a driver of an electric or hybrid vehicle within a fleet comprising one or more vehicles, each of the one or more vehicles including a battery for powering an electrical drive unit, a mechanical braking system, and a regenerative braking system configured to recover energy and provide power to the battery, the method comprising:

detecting a series of deceleration events of a data gathering vehicle within the one or more vehicles;
during each detected deceleration event, obtaining, at a plurality of times during the deceleration event, data indicative of:

(i) a power provided to the battery by the regenerative braking system of the data gathering vehicle;
(ii) a speed of the data gathering vehicle; and
(iii) an acceleration of the data gathering vehicle; and

time stamping the obtained data;
generating a function for the one or more vehicles within the fleet based on the data obtained during the series of deceleration events of the data gathering vehicle, the function representing a relationship between the power provided to the battery by the regenerative braking system, the speed, and the acceleration;

detecting a deceleration event of a monitored vehicle within the one or more vehicles;
obtaining, at a first time during said deceleration event, monitoring data indicative of:

(i) a power provided to the battery by the regenerative braking system of the monitored vehicle;
(ii) a speed of the monitored vehicle; and
(iii) an acceleration of the monitored vehicle; and

time stamping said monitoring data; and
using the generated function, and the time stamped monitoring data obtained during said deceleration event, to determine whether a driver of the monitored vehicle has used mechanical braking at the first time corresponding to the time stamp, and providing an output based on said determination.

According to a second aspect of the invention, there is provided a system for assessing and/or advising a driver of an electric or hybrid vehicle within a fleet comprising one or more vehicles, each of the one or more vehicles including a battery for powering an electrical drive unit, a mechanical braking system, and a regenerative braking system configured to recover energy and provide power to the battery, the system comprising:

(i) a device installed in a data gathering vehicle within the fleet, configured to:

detect a series of deceleration events of the data gathering vehicle;
during each detected deceleration event, obtain, at a plurality of times during the deceleration event, data indicative of:

(i) a power provided to the battery by the regenerative braking system of the data gathering vehicle;
(ii) a speed of the data gathering vehicle;
(iii) an acceleration of the data gathering vehicle; and

time stamp the obtained data;

(ii) one or more processors configured to:
generate a function for the one or more vehicles within the fleet based on the data obtained during the series of deceleration events of the data monitoring vehicle, the function representing a relationship between the power provided to the battery by the regenerative braking system, the speed, and the acceleration; and
(iii) a device installed in a monitored vehicle within the one or more vehicles, configured to:

detect a deceleration event of the monitored vehicle;
obtain, at a first time during said deceleration event, monitoring data indicative of:

(i) a power provided to the battery by the regenerative braking system of the monitored vehicle;
(ii) a speed of the monitored vehicle; and
(iii) an acceleration of the monitored vehicle; and

time stamp the obtained monitoring data; and
(iv) one or more processors configured to: use the generated function, and the time stamped monitoring data obtained at the first time during said deceleration event, to determine whether a driver of the monitored vehicle has used mechanical braking at the first time; and provide an output based on said determination.

In embodiments, the fleet may comprise vehicles which are operated by the same operator (e.g. customer) such as a haulage company, taxi service, courier etc. The one or more vehicles within the fleet may be of the same or different specifications.
In embodiments, vehicles may be considered to be of the same vehicle specification if they share characteristics which influence regenerative braking performance. Such characteristics may include one or more of:

i. Manufacturer (Brand)
ii. Model
iii. Year of production
iv. Battery capacity [kWh]
v. Motor power[kW]
vi. Weight [kg]

In embodiments, the one or more vehicles (including the data gathering vehicle and the monitoring vehicle) comprise vehicles having specifications which are different, but are similar enough that the function which is generated using data from the data gathering vehicle can be used on data obtained from the monitored vehicle. For example, vehicles having the same powertrains (e.g. same battery capacity and motor power), and similar weights may e a similar enough specification that the function which is generated using data from the data gathering vehicle can be used on data obtained from the monitored vehicle. Examples of vehicles which may have similar enough specifications are: the Nissan™ Leaf and Renault® Zoe; The Tesla® Model 3®, Tesla® Model Y®, and Tesla® Model S®; the Volkswagen® ID4 and Volkswagen® ID5.
In embodiments, the one or more vehicles are vehicles having the same vehicle specification, wherein the generated function is a function for the given vehicle specification.
It will be understood that the monitored vehicle could be the data gathering vehicle in some embodiments (i.e. the function is generated using data from a vehicle, and then used on data obtained from the same vehicle).
The device installed in the data gathering vehicle and the device installed in the monitored vehicle may be referred to as vehicle devices. In some embodiments, the vehicle device in the monitored vehicle may be the vehicle device in the data gathering vehicle.

In embodiments, the vehicle devices may comprise data gathering and processing devices and/or driver output devices. In embodiments, each data gathering and processing device comprises a memory and a processor. In embodiments, each data gathering and processing device comprises an acceleration sensor. In embodiments, an acceleration sensor may be comprised elsewhere in the vehicle. In embodiments, the acceleration sensor may be omitted.

It will be understood that the detected deceleration event of the monitoring vehicle may be comprised in the series of deceleration events of the data gathering vehicle. In embodiments, data obtained during deceleration events of the monitoring vehicle is fed into the generated function such that the function is continuously updated.

It will be understood that the data gathering vehicle may change. In some embodiments, the function is initially generated using data from a first vehicle, making the first vehicle the data gathering vehicle. The function may then be used on data from a second vehicle, which is different to the first vehicle in the fleet. The second vehicle is hence the monitored vehicle. The monitoring data from the second vehicle may then be fed into the generated function continuously such that the function is updated using data from the second vehicle. As a result, the second vehicle is now also a data gathering vehicle.

It will be understood that the term mechanical braking encompasses any braking of the vehicle in which kinetic energy is not recovered during braking (e.g. is dissipated as heat). For example, mechanical braking encompasses friction braking performed by a brake pad on a brake disk or brake drum. In embodiments where the one or more vehicles in the fleet are hybrid vehicles comprising an internal combustion-based drivetrain, the term mechanical braking also encompasses engine braking performed by an internal combustion-based drivetrain.

It will be understood that data indicative of the power provided to the battery by the regenerative braking system, the speed of the vehicle, and the acceleration of the vehicle may be data indicative of the instantaneous values of the power, speed, and acceleration at a plurality of times during a deceleration event. It will be understood that for each of a plurality of times, the data indicative of the power, speed, and acceleration is data indicative of the power, speed, and acceleration at that moment in time. Each of the plurality of times may be a time window in which data is considered to indicative of the power, speed, and acceleration at a moment in time which is representative of (e.g. contained within) that time window. For example, the moment in time may be t = x +/- 0, 10, 20, 30, 40, or 50ms.

It will be appreciated that, in this method and system, it is possible to determine whether or not a driver of a monitored vehicle has used mechanical braking, and thus if they are decelerating as efficiently as possible. By building the function using data obtained from a data gathering vehicle, no fixed information (e.g. maximum possible regenerative braking torque) about the data gathering vehicle needs to be known or input into the function. As such, the method and system can be applied to vehicles of different specification without modification. When it is desired to use the method and system with vehicles having a different specification (e.g. a specification which is sufficiently different that the built function is not sufficiently accurate), the function can be re-built in the same way using a data gathering vehicle having the desired specification. The method and system thus provides a more adaptable solution to assessing and/or advising drivers.

In embodiments the fleet of one or more vehicles consists of road-going vehicles, e.g. cars, vans, trucks, motorcycles etc. The road-going vehicles may include tires.

In embodiments, data indicative of the power provided to the battery by the regenerative braking system is obtained from CAN/OBD/FMS data of the vehicle.

In embodiments, data indicative of the vehicle speed is obtained from CAN/OBD/FMS data of the vehicle.

In embodiments, data indicative of the vehicle acceleration is obtained from CAN/OBD/FMS data of the vehicle.

In embodiments, data indicative of the vehicle speed is obtained using location data (e.g. GPS data). The location data may be obtained by a location device situated within the vehicle, whether a device permanently installed in the vehicle (e.g. an inbuilt tracking device) or a mobile device (e.g. a driver's mobile phone).

In embodiments, data indicative of the vehicle acceleration is obtained using an acceleration sensor (e.g. an integrated circuit accelerometer or stress gauge). The acceleration sensor may be situated within the vehicle, whether an acceleration sensor permanently installed in the vehicle (e.g. as part on the onboard computer) or provided by a mobile device (e.g. a driver's mobile phone).

In embodiments, the series of deceleration events of the data gathering vehicle may be detected during an initial data gathering phase. The method may comprise providing an output to a driver of the data gathering vehicle that an initial data gathering phase is being performed. The output may provide instructions for the driver to drive in a certain manner in order to obtain desirable data. One or more of the following conditions may be preferable during an initial data gathering phase:

(i) the battery of the data gathering vehicle has a charge level between 10% and 90%;
(ii) the data gathering vehicle is being driven on substantially flat terrain;
(iii) the data gathering vehicle is being driven efficiently, maximising use of regenerative braking.

In embodiments, the series of deceleration events (of the data gathering vehicle) are obtained in a rolling window. The use of a rolling window allows the generated function to be updated based on the most recent data. This may be particularly advantageous when conditions (e.g. of the environment, or of the vehicle) are changing. For example, batteries perform differently in different temperatures. As a result, it may be advantageous that, via the use of a rolling window, data which was collected in one season (e.g. in the winter), is not factored into the generated function during a different season (e.g. the summer). As another example, batteries deteriorate over time, and so it may be advantageous that, via the use of a rolling window, data obtained from a vehicle when the battery was new (e.g. undeteriorated) is not factored into the generated function when the battery of the vehicle has aged and thus deteriorated.

In embodiments, the rolling window comprises one or more of:

(i) a predetermined number of the most recently detected deceleration events
(ii) a predetermined number of most recent trips undertaken by the data gathering vehicle;
(iii) a predetermined time period.

The predetermined time period may be between 1 month and 18 months, e.g. between 1 month and 12 months, e.g. between 2 months and 10 months, e.g. 6 months.

An advantage of defining the rolling window on a predetermined number of recent trips, or recent deceleration events, may be that the rolling window can be adjusted based on the frequency with which the monitored vehicle is driven, and/or the manner in which the data gathering vehicle is driven. If a data gathering vehicle is driven very infrequently, a time window based on a fixed time period may only cover a few trips. Further, if a vehicle is driven infrequently, and usually on long highway journeys, a time window based on a fixed time period may only cover a small number of deceleration events.

It will be understood that a rolling window may comprise a combination of the above. For example, the rolling window may comprise either 6 months, or 120 trips, whichever comes first.

In embodiments, the time window may not be a rolling window, and may be a fixed window comprising one or more of:

(i) a predetermined number of detected deceleration events;
(ii) a predetermined number of trips undertaken by the data gathering vehicle;
(iii) a predetermined time period.

The predetermined time period may be between 1 month and 18 months, e.g. between 1 month and 12 months, e.g. between 2 months and 10 months, e.g. 6 months.

In such embodiments, the function may reset at the end of every time window.

In embodiments, generating the function comprises generating a statistical function (e.g. a multivariate normal distribution or multivariate t-distribution) of power provided to the battery as a function of speed and acceleration of the vehicle.

In embodiments, generating the function comprises calculating a standard deviation ($\sigma$ value) for each acceleration value.

In embodiments, the function comprises a look-up table comprising corresponding values of power provided to the battery, speed, and acceleration of the data gathering vehicle.

In embodiments, the method comprises sending the generated function to a remote server, and the remote server using the generated function to determine whether a driver of a monitored vehicle within the fleet which is different to the data gathering vehicle has used mechanical braking at a first time during a deceleration event and providing an output based on said determination.

In embodiments, the method comprises sending the generated function from the remote server to a device in a monitored vehicle within the one or more vehicles which is different to the data gathering vehicle, wherein the generated function is used by the device in the monitored vehicle to determine whether a driver of the monitored vehicle has used mechanical braking at a first time. In embodiments, the device in the monitored vehicle feeds the obtained data into the generated function such that the monitored vehicle also becomes a data gathering vehicle.

In embodiments, the method comprises detecting a series of deceleration events of a plurality of data gathering vehicles within the one or more vehicles, wherein the generated function is generated based on the data obtained during the series of deceleration events of the plurality of data gathering vehicles of the given vehicle specification.

In embodiments, the function may be generated centrally at a remote server. In embodiments, separate functions may be generated locally at devices installed in vehicles within the one or more vehicles (e.g. each vehicle device may generate its own function). In embodiments, a function generated by a first device on a vehicle within the one or more vehicles may be used as the basis (e.g. starting point) for a subsequent function generated by a second device on a (same or other) vehicle within the one or more vehicles.

In embodiments, the method comprises:

using the generated function, and the time stamped data obtained at the first time during the deceleration event of the monitored vehicle, to determine an expected acceleration value at the first time, corresponding to the acceleration which could be achieved using the regenerative braking system alone, based on the power and speed measurements having time stamps corresponding to the first time;

comparing the magnitude of the obtained acceleration having a time stamp corresponding to the first time to the magnitude of the expected acceleration value; and

determining that the monitored vehicle has used mechanical braking at the first time if the magnitude of the obtained acceleration is greater than the magnitude of the expected acceleration value by a predetermined amount; and

providing an output based on said determination.

In embodiments, the predetermined amount is based on the standard deviation of expected acceleration value. In embodiments, the predetermined amount is equal to 3 times the standard deviation of the expected acceleration value.

In embodiments, the output comprises driver performance data for the driver of the monitored vehicle.

In embodiments, the method comprises analysing the driver performance data and generating a driver score and/or driver advice based on said performance data.

In embodiments, the method comprises storing driver performance data generated during a time window from a plurality of deceleration events in a memory, analysing the driver performance data, and generating a driver score and/or driver advice based on said driver performance data, wherein the driver score and/or driver advice is based on the driver's performance over the time window. The memory may be a local memory of a device installed in the monitored vehicle. The memory may be a remote memory (e.g. a memory of the remote server).

In embodiments, a driver may have a driver profile which is stored in the memory of the remote server. The driver's profile may comprise that driver's score, and the driver's score may be updated whenever the driver drives a vehicle within the fleet of vehicles.

In embodiments the time window is a rolling window.

The use of a rolling window allows the driver score and/or driver advice to be updated based on the most recent data.

In embodiments, the rolling window comprises one or more of:

(i) a predetermined time period (e.g. between 5 days and 100 days, e.g. between 15 days and 60 days, e.g. 30 days);
(ii) a predetermined number of most recent trips undertaken by the monitored vehicle;
(iii) a predetermined number of the most recently detected deceleration events.

An advantage of defining the rolling window on a predetermined number of recent trips, or recent deceleration events, may be that the rolling window can be adjusted based on the frequency with which the monitored vehicle is driven. If a monitored vehicle is driven very infrequently, a time window based on a fixed time period may only cover a few trips. Further, if a vehicle is driven infrequently, and usually on long highway journeys, a time window based on a fixed time period may only cover a small number of deceleration events.

It will be understood that a rolling window may comprise a combination of the above. For example, the rolling window may comprise either 30 days, or 20 trips, whichever comes first.

In embodiments, the time window may not be a rolling window, and may be a fixed window comprising one or more of:

(i) a predetermined time period (e.g. between 5 days and 100 days, e.g. between 15 days and 60 days, e.g. 30 days);
(ii) a predetermined number of most recent trips undertaken by the monitored vehicle;
(iii) a predetermined number of the most recently detected deceleration events.

In such embodiments, the function may reset at the end of every time window.

in embodiments, analysing the driver performance data comprises determining a proportion of deceleration time where mechanical braking is used, and a proportion of deceleration time where only regenerative braking is used. The proportion of deceleration time where only regenerative braking is used may be used to generate a score out of 10. For example, a driver using only regenerative braking 60% of the time may be given a score of 6 out of 10.

In embodiments, analysing the driver performance data comprises comparing the driver performance data to driver performance data of one or more other drivers (e.g. a fleet average).

In embodiments, the method comprises providing the driver performance data and/or driver score and/or advice to the driver via a driver output device. The driver output device may be a driver's smartphone, or may be an output device which is permanently installed in a vehicle. In particular, it may be advantageous to output advice and/or scores calculated for a single deceleration event or single trip to a driver such that the driver can use the information to improve their driving standards.

In embodiments, the method comprises providing the driver performance data and/or driver score to a fleet manager via a fleet manager output device. The fleet manager output device may be a desktop computer. In particular it may be advantageous to output driver scores calculated over a time period (e.g. over an extended time period such as 30 days) on a fleet manager device so that the fleet manager can have an overview of their driver's performance.

In embodiments, the driver performance data and/or driver score and/or advice to the driver is provided as an overlay on a section of an electronic map corresponding to the location to which the driver performance data relates.

Such embodiments may help to better understand the driver performance data and/or driver score and/or advice. In particular, displaying driver performance data as an overlay on a section of an electronic map may help a driver and/or fleet manager to recognise that the driver usually uses mechanical braking when approaching road features such as junctions. The fleet manager may therefore advise the driver that they need to anticipate more. In embodiments, the method may comprise analysing the driver performance data in view of the associated location data such that these trends can be recognised automatically, and advice can be provided to a driver via a driver output device (e.g. Look ahead and anticipate junctions to improve braking efficiency).

In embodiments, generating the function comprises obtaining further data indicative of one or more of:

(i) vehicle mass;
(ii) battery temperature;
(iii) battery age;
(iv) tyre information; and

generating the function based on said obtained further data.

In embodiments, the method comprises:

obtaining, at a plurality of times during a deceleration event of a monitored vehicle within the one or more vehicles of the fleet, data indicative of a power provided to the battery by the regenerative braking system of the monitored vehicle;
obtaining, at the start and the end of the deceleration event, data indicative of a speed of the monitored vehicle;
calculating the energy recovered by the regenerative braking system during the deceleration event using the data indicative of the power provided to the battery by the regenerative braking system of the monitored vehicle;
calculating a maximum possible energy which could have been provided to the battery by the regenerative braking system during the deceleration event using the function, and the data indicative of the speed of the monitored vehicle;
comparing the maximum possible energy to the energy recovered during the deceleration event; and
providing an output based on said comparison.

This is considered to be novel and inventive in its own right, and therefore, in accordance with a third aspect of the invention, there is provided a computer-implemented method of assessing and/or advising a driver of an electric or hybrid vehicle within a fleet comprising one or more vehicles, each of the one or more vehicles including a battery for powering an electrical drive unit, a mechanical braking system, and a regenerative braking system configured to recover energy and provide power to the battery, the method comprising:

detecting a series of deceleration events of a data gathering vehicle within the one or more vehicles;
during each detected deceleration event, obtaining, at a plurality of times during the deceleration event, data indicative of:

(i) a power provided to the battery by the regenerative braking system of the data gathering vehicle;
(ii) a speed of the data gathering vehicle; and
(iii) an acceleration of the data gathering vehicle; and

time stamping the obtained data;
generating a function for the one or more vehicles within the fleet based on the data obtained during the series of deceleration events of the data gathering vehicle, the function representing a relationship between the power provided to the battery by the regenerative braking system, the speed, and the acceleration;
detecting a deceleration event of a monitored vehicle within the one or more vehicles;
obtaining, at a plurality of times during the deceleration event, data indicative of a power provided to the battery by the regenerative braking system of the monitored vehicle;
obtaining, at the start and the end of the deceleration event, data indicative of a speed of the monitored vehicle;
calculating the energy recovered by the regenerative braking system during the deceleration event using the data indicative of the power provided to the battery by the regenerative braking system of the monitored vehicle;
calculating a maximum possible energy which could have been provided to the battery by the regenerative braking system during the deceleration event using the generated function, and the data indicative of the speed of the monitored vehicle;

comparing the maximum possible energy to the energy recovered during the deceleration event; and

providing an output based on said comparison.

In embodiments, the method comprises:

detecting an obstacle in a path of the monitored vehicle;

obtaining data indicative of a current speed of the monitored vehicle;

calculating, using the generated function and the data indicative of the current speed of the monitored vehicle, a minimum distance from the obstacle by which the monitored vehicle must start decelerating in order to reach a desired speed at the obstacle without using mechanical braking; and

outputting instruction to the driver of the monitored vehicle to start decelerating when the minimum distance is reached.

The obstacle may be detected in any known way. An obstacle can be any road or traffic feature which will require the vehicle to slow down, or to come to a stop. For example, an obstacle could be an obstruction such as another vehicle, or a traffic signal, a junction, a roundabout etc. In embodiments, the monitored vehicle may comprise an obstacle recognition system such as a RADAR obstacle detection system or a LIDAR obstacle detection system. Such systems may be able to detect obstructions such as other vehicles. In embodiments, the obstacle may be detected using map data and current location data (e.g. GPS data). In such embodiments, map data and current location data may be used to recognise that the vehicle is approaching a road feature such as a junction or stop sign where the vehicle will need to slow down or stop.

This is considered to be novel and inventive in its own right. Therefore, in accordance with a fourth aspect of the invention, there is provided a computer-implemented method of assessing and/or advising a driver of an electric or hybrid vehicle within a fleet comprising one or more vehicles, each including a battery for powering an electrical drive unit, a mechanical braking system, and a regenerative braking system configured to recover energy and provide power to the battery, the method comprising:

detecting a series of deceleration events of a data gathering vehicle within the one or more vehicles;

during each detected deceleration event, obtaining, at a plurality of times during the deceleration event, data indicative of:

(i) a power provided to the battery by the regenerative braking system of the data gathering vehicle;

(ii) a speed of the data gathering vehicle; and

(iii) an acceleration of the data gathering vehicle; and

time stamping the obtained data;

generating a function for the one or more vehicles within the fleet based on the data obtained during the series of deceleration events of the data gathering vehicle, the function representing a relationship between the power provided to the battery by the regenerative braking system, the speed, and the acceleration;

detecting an obstacle in a path of the monitored vehicle;

obtaining data indicative of a current speed of the monitored vehicle;

calculating, using the generated function and the data indicative of the current speed of the monitored vehicle, a minimum distance from the obstacle by which the monitored vehicle must start decelerating in order to reach a desired speed at the obstacle without using mechanical braking; and

outputting instruction to the driver of the monitored vehicle to start decelerating when the minimum distance is reached.

By instructing the driver to start decelerating at a distance where only regenerative braking need be used to slow down to a desired speed by the time the vehicle reaches the obstacle, the driver's efficiency can be improved.

In embodiments, the system comprises an output device (e.g. a driver output device and/or a fleet manager output device) configured to provide one or more of driver performance data, a driver score, advice, and/or instructions to the driver and/or to a fleet manager. The output device may be a visual device such as a screen, an audio device, a haptic output device, or any combination of these.

In embodiments, the system comprises a remote server configured to communicate with one or more of: the vehicle devices, the driver output device, the fleet manager output device.

In any of the aspects and embodiments disclosed herein, where a device is described as being located on a vehicle, it will be understood that this refers to the physical presence of the hardware as a result of it being mounted to carry out its function(s).

In some embodiments the device installed in a vehicle is a mobile device carried by the vehicle (i.e. removably located thereon). In some embodiments the device is a fixed device carried by the vehicle (i.e. semi-permanently or permanently located thereon). For example, the device may be plugged into an On-Board Diagnostics (OBD) port or may be plugged into a port of an internal communications network (such as a CAN bus) of the vehicle. The fixed device may include mechanical and/or electrical mounting means (e.g. for connecting to the power supply from the vehicle's battery). Preferably the device is a fixed device in the vehicle, for example plugged into an On-Board Diagnostics (OBD) port or even integrated with the on-board vehicle computer. The fixed device may include mechanical and/or electrical mounting means (e.g. for connecting to the power supply from the vehicle battery). The device being a fixed device means that it is not intended to be regularly removed and carried by a user in the form of a mobile device, however the fixed device may still be installable and removable rather than being an absolutely permanent fixture in the vehicle. In other words, the device may be manufactured by a third party and installed in a vehicle subsequent to its manufacture, for example as part of a fleet management system. The device can therefore be distinguished from any onboard data processing systems installed by the vehicle manufacturer. In various examples, the device may comprise one of the LINK tracking devices available from Webfleet Solutions B.V..

It will of course be appreciated that the term 'remote server' as used herein means a computer or machine (e.g. server device) connected to a network such that the server sends and/or receives data from other devices (e.g. computers or other machines) on that network without being in physical proximity. Additionally or alternatively, the server may provide resources and/or services to other devices on the network. The network may be the Internet or some other suitable network. The server may be embodied within any suitable server type or server device, e.g. a file server, application server, communications server, computing server, web server, proxy server, etc. The server may be a single computing device, or may be a distributed system, i.e. the server functionality may be divided across a plurality of computing devices. For example, the server may be a cloud-based server, i.e. its functions may be split across many computers 'on demand'. In such arrangements, server resources may be acquired from one or more data centres, which may be located at different physical locations.

Any of the methods disclosed herein can be computer-implemented methods.

Brief Description of the Drawings

One or more non-limiting examples will now be described, by way of example only, and with reference to the accompanying figures in which:

Fig. 1 is a schematic illustration of a hybrid or electric vehicle;
Fig. 2 is a schematic illustration of a system according to some embodiments of the invention;
Fig. 3 is a flow chart illustrating a method in accordance with some embodiments of the invention;
Fig. 4 is a schematic illustration of an output device displaying a message;
Fig. 5 is a 3D plot illustrating the power cap function;
Fig. 6 is a 2D projections of the 3D plot of Fig. 5;
Figs 7a - 7c each show a schematic illustration of an output device displaying a message;
Fig. 8 shows a summary screen of an output device;
Fig. 9 shows an output device displaying driving performance data;
Fig. 10 is a flow chart illustrating a method in accordance with some embodiments of the invention;
Fig. 11 is a schematic illustration of an output device displaying a message;
Fig. 12 is a flow chart illustrating a method in accordance with some embodiments of the invention;
Fig. 13 is a schematic illustration of an output device displaying a message.

Detailed Description of Preferred Embodiments

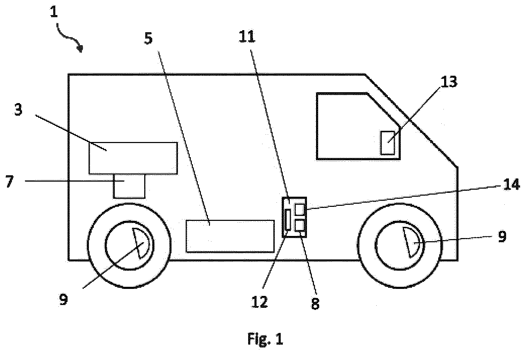

Where used herein, references to acceleration values are to be understood as references to the magnitude of the acceleration since the methods and systems described herein are only concerned with decelerations (i.e. negative accelerations). Fig. 1 is a schematic illustration of an electric or hybrid vehicle 1. The vehicle 1 comprises an electrical drive unit 3, a battery 5 for powering the electrical drive unit 3, a regenerative braking system 7 configured to use electrical resistance to brake the vehicle, recover energy whilst braking the vehicle 1, and provide power to the battery 5, and a mechanical braking system 9 configured to brake the vehicle 1 using friction.

Further provided in the vehicle are a vehicle device 11 which in embodiments is a data gathering and processing device 11, and a driver output device 13. In embodiments, the data gathering and processing device 11 comprises a memory 8 and a processor 14. In embodiments, the data gathering and processing device 11 comprises an acceleration sensor 12. In embodiments, the acceleration sensor 12 may be comprised elsewhere in the vehicle 1. In embodiments, the acceleration sensor 12 may be omitted.

The data gathering and processing device 11 may be a telematics device that is connected to, or is an integral part of the vehicle 1. For example, the data gathering and processing device 11 may be connected to an On-Board Diagnostics (OBD) port of the vehicle 1. The data gathering and processing device 11 may be temporarily, or permanently, installed in the vehicle 1. In some examples, the data gathering and processing device 11 may comprise one of the LINK tracking devices available from Webfleet Solutions B.V.

The driver output device 13 may a purpose-built device which is temporarily, or permanently, installed in the vehicle 1. In embodiments, the driver output device may comprise a driver's smart phone with an application installed thereon.

The regenerative braking system 7 may be implemented in any known way. For example, the regenerative braking system 7 may comprise the electrical drive unit 3, wherein, when the regenerative braking system 7 is braking the vehicle, the electrical drive unit 3 (motor) is reversed such that the motor is rotated by the vehicle wheels, slowing the vehicle wheels due to the electrical resistance of the motor, as well as inducing a current in the motor which can be used to provide power to the battery 5.

The friction braking system 9 may be implemented in any known way. In some examples, the friction braking system 9 is a hydraulically activated braking system comprising hydraulically activated brake callipers which press brake pads against brake discs on the vehicle wheels in order to brake the vehicle 1.

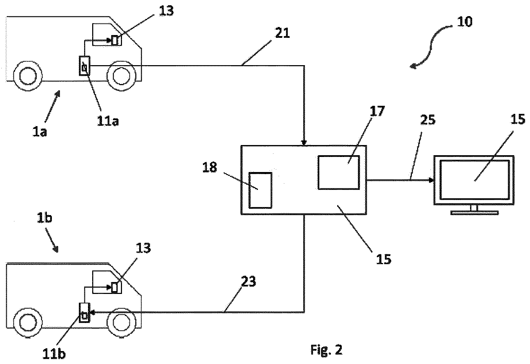

Fig. 2 schematically illustrates a system 10 for assessing and/or advising a driver of an electric or hybrid vehicle within a fleet of one or more vehicles. The system comprises a data gathering and processing device 11a installed in a data gathering vehicle 1a within the fleet, a data gathering and processing device 11b installed in a monitored vehicle 1b within the fleet, a remote server 15 comprising one or more processors 17, and a memory 18, a driver output device 13 provided in each vehicle within the fleet, and a fleet manager output device 19. The data gathering and processing device 11a is configured to send data to the remote server 15 as illustrated by arrow 21 shown in Fig. 2. The remote server 15 is configured to receive data from the data gathering and processing devices 11a. The remote server 15 is also configured to send data to the data gathering and processing device 11b installed in the monitored vehicle 1b, as illustrated by arrow 23 in Fig. 2. and to send data to the fleet manager output device 19, as illustrated by arrow 25 in Fig. 2. Both the data gathering and processing devices 11a, 11b are configured to send data to driver output devices 13.

It will be understood that there may be no difference between the configuration of the data gathering vehicle 1a, and the monitored vehicle 1b, and that any of the vehicles within the fleet can act as a data gathering vehicle 1a, or a monitored vehicle 1b, or both a data gathering vehicle and a monitored vehicle simultaneously. As such, each vehicle device 11 may be configured to send and receive data to and from the remote server 15.

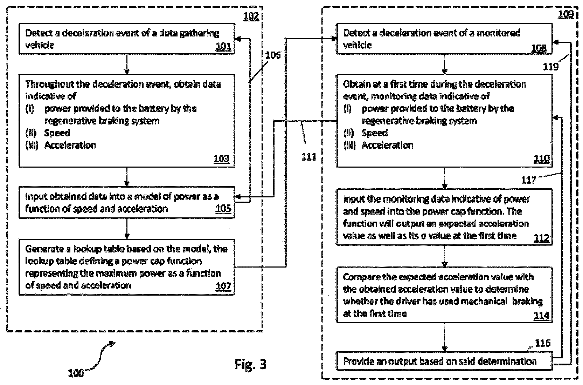

A method 100 of assessing and/or advising a driver of an electric or hybrid vehicle within a fleet comprising one or more vehicles will now be discussed with reference to the flow chart of Fig. 3. The method 100 will be discussed with reference to the system 10 of Fig. 2.

At step 101, a deceleration event of the data gathering vehicle 1a is detected. In embodiments, a deceleration event may be detected using an acceleration sensor 12 which is comprised in the data gathering vehicle 1a, (e.g. in the data gathering and processing device 11). In embodiments, a deceleration event may be detected using data indicative of speed, which may be obtained from OBD/CAN/FMS data from the data gathering vehicle 1a. For example, the beginning of a deceleration event may be detected by determining that the vehicle speed has decreased over two or more consecutive vehicle speed readings, and the end of a deceleration event may be detected by determining that the vehicle speed has increased, or has remained constant over two or more consecutive vehicle speed readings.

At step 103, during the detected deceleration event, data is obtained at a plurality of times during the deceleration event. The obtained data is data indicative of:

(i) a power provided to the battery 5 by the regenerative braking system 7 of the data gathering vehicle 1a;
(ii) a speed of the data gathering vehicle 1a; and
(iii) an acceleration of the data gathering vehicle 1a.

The data may be obtained from any suitable source. In embodiments, the power is derived from data obtained by the data gathering and processing device 11 from OBD/CAN/FMS data from the data gathering vehicle 1a. In embodiments, the power is derived using voltage and current data obtained by the data gathering and processing device 11 from the OBD/CAN/FMS data according to $P=VI$. In embodiments, the speed data is directly obtained by the data gathering and processing device 11 from OBD/CAN/FMS data from the data gathering vehicle 1. In embodiments, the speed data is derived from GPS readings taken from a GPS device (not shown) located in the data gathering vehicle 1a. In embodiments, the acceleration data is obtained using an acceleration sensor 12 which is comprised in the data gathering and processing device 11. It will be understood that in other embodiments, the acceleration data may be derived from vehicle speed data obtained from OBD/CAN/FMS data from the data gathering vehicle 1.

Data may be obtained continually throughout the deceleration event. In embodiments, data is obtained at a fixed interval (e.g. 100ms) throughout the deceleration event. The obtained data is time stamped by the data gathering and processing device 11. In embodiments, a single time stamp may be applied to any data obtained within a time window centred on the time stamp value. For example, any data obtained between t=50ms and t=149ms may be given the time stamp t=100ms, any data obtained between t=150ms and t=249ms may be given the time stamp t=200ms, etc.

At step 105, the obtained time-stamped data is input into a model which is a statistical function of power as a function of speed and acceleration. In embodiments, the statistical function may be a multivariate normal distribution of power as a function of speed and acceleration. In embodiments, the data is input into the model at the data gathering and processing device 11a such that a model is independently developed at each data gathering and processing device 11a. in embodiments, the data is sent to the remote server 15 and is input into a central fleet-wide model which is generated and stored in the remote server 15.

As shown by arrow 106, the method 100 is iterative, and once the data obtained throughout a deceleration event has been input into the model, the method returns to step 101 to detect another deceleration event of the data gathering vehicle 1. As such, a series of deceleration events are detected, and data obtained throughout each one of the series of deceleration events is input into the model.

In embodiments, the series of deceleration events are obtained in a rolling window such that the model is continually updated over time. In embodiments, the rolling window may comprise a predetermined number of the most recently detected deceleration events. In embodiments, the rolling window may comprise a predetermined number of the most recent trips undertaken by the data gathering vehicle. In embodiments, the rolling window may comprise a predetermined time period (e.g. 6 months).

At step 107, a function, which may be referred to as the power cap function, is generated at the data gathering and processing device. The function represents the maximum power provided to the battery by the regenerative braking system as a function of vehicle speed and vehicle acceleration. In this example, the generated function comprises a look-up table. The look-up table is created by taking, for each given value of vehicle speed and vehicle acceleration, the most expected value of power from the statistical function. The power cap function also takes into account the standard deviation (sigma value) for each most expected value.

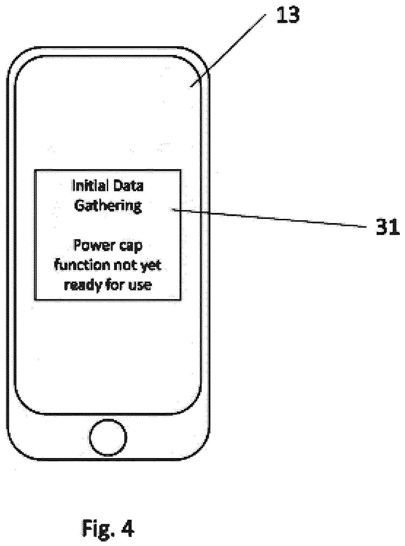

The steps 101 -107 may be considered a "function building" stage 102 of the method 100, which result in generating the power cap function. Where the method 100 is being performed on a new vehicle or fleet of vehicles, the generated function may not be useable until a sufficient volume of data has been obtained and input to the model. During this period, an output 31 may be provided (e.g. to a fleet manager or to a driver of the data gathering vehicle 1) that the function is not yet ready for use. An example of such an output 31 is illustrated in Fig. 4 on a driver output device 13.

Once the generated function is ready for use, it can be used to determine whether or not a driver of a monitored vehicle 1b has used mechanical braking. The monitored vehicle 1b could be the data gathering vehicle 1a. The monitored vehicle 1b could also be a further vehicle (as shown in Fig. 2) which is not the data gathering vehicle 1a, but is similar enough to the data gathering vehicle 1a that the function which has been built using data from the data gathering vehicle is directly applicable to the monitored vehicle. For example, a fleet of vehicles may comprise a plurality of vehicles which have the same vehicle specification. The fleet of vehicles may comprise at least one data gathering vehicle 1a and at least one monitored vehicle 1b which may be the same vehicle. In embodiments where the power cap function is generated at the data gathering and processing device 11a of the data gathering vehicle 1a, and the monitored vehicle 1b is not the data gathering vehicle 1a, the method comprises sending the generated function to the remote server 15, and then sending the function from the remote server 15 to the data gathering and processing device 11b of the monitored vehicle 1b.

At step 108, a deceleration event of a monitored vehicle 1b is detected. For example, a deceleration event may be detected using an acceleration sensor which is comprised in the monitored vehicle 1b, (e.g. in the data gathering and processing device 11b). For example, a deceleration event may be detected using data indicative of speed, which may be obtained from OBD/CAN/FMS data from the monitored vehicle 1b. For example, the beginning of a deceleration event may be detected by determining that the vehicle speed has decreased over two or more consecutive vehicle speed readings, and the end of a deceleration event may be detected by determining that the vehicle speed has increased, or has remained constant over two or more consecutive vehicle speed readings.

At step 110, during the detected deceleration event, monitoring data is obtained at a first time during the deceleration event. The obtained monitoring data is data indicative of:

(i) a power provided to the battery 5 by the regenerative braking system 7 of the monitored vehicle 1b;
(ii) a speed of the monitored vehicle 1b; and
(iii) an acceleration of the monitored vehicle 1b.

The monitoring data may be obtained from any suitable source. For example, the power is derived from data obtained by the data gathering and processing device 11b from OBD/CAN/FMS data from the monitored vehicle 1b. For example, the power is derived using voltage and current data obtained by the data gathering and processing device 11b from the OBD/CAN port according to P=VI. For example, the speed data is directly obtained by the data gathering and processing device 11b from OBD/CAN/FMS data from the monitored vehicle 1b. In embodiments, the speed data is derived from GPS readings taken from a GPS device (not shown) situated in the monitored vehicle 1b. For example, the acceleration data is obtained using an acceleration sensor 12 which is comprised in the data gathering and processing device 11b. In other examples, the acceleration data may be derived from vehicle speed data obtained by the data gathering and processing device 11b from OBD/CAN/FMS data from the monitored vehicle 1b.

The obtained monitoring data is time stamped by the data gathering and processing device 11b. For example, a single time stamp may be applied to any data obtained within a time window centred on the time stamp value. Such that data which was obtained close to the first time is considered to have been obtained at the first time. For example, any data obtained between t=50ms and t=149ms may be given the time stamp t=100ms, any data obtained between t=150ms and t=249ms may be given the time stamp t=200ms, etc.

At step 112, the obtained power, and obtained speed corresponding to the first time are input into the previously generated power cap function as variables to determine an expected acceleration value at the first time. The function also outputs the standard deviation ($\sigma$ value) of the expected acceleration value. This expected acceleration corresponds to the maximum deceleration which could be achieved (for these speed and power values) using regenerative braking alone.

At step 114 the magnitude of the expected acceleration value is compared to the obtained acceleration value. If the magnitude of the obtained acceleration value is greater than the magnitude of the expected acceleration value + 3$\sigma$, i.e. if:

$$a_o > a_e + 3\sigma$$

(where $a_o$ is the obtained acceleration value and $a_e$ is the expected acceleration value) then it is determined that the driver was using mechanical braking at the first time. If the magnitude of the obtained acceleration value is smaller than or equal to the magnitude of the expected acceleration value + 3$\sigma$, then it is determined that the driver was not using mechanical braking at the first time and at step 116, an output is provided based on said determination.

Steps 108 - 116 may be considered a "function usage" stage 109 of the method 100.

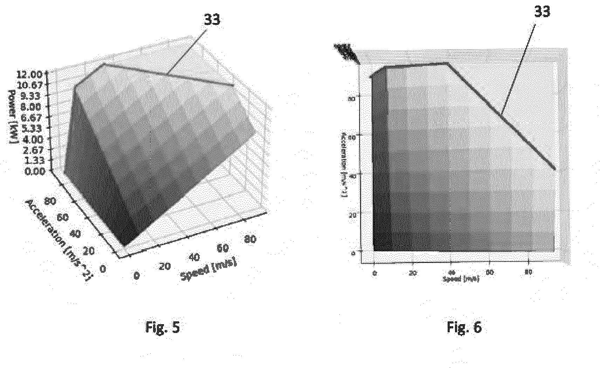

The power cap function is illustrated by the 3D plot shown in Fig. 5. The plot shows maximum power plotted against vehicle acceleration and vehicle speed. It can be seen in Fig. 5 that maximum power generally increases as acceleration and speed increase up until a limit which is illustrated in Fig. 5 and Fig. 6 (2D projection) by line 33. After line 33, the power does not increase any further regardless of further increases in speed or acceleration. This is because there is an inherent limit to the deceleration which can be achieved using regenerative braking alone. This limit is a function of the properties of a regenerative braking system within a vehicle, and so will vary between different vehicle specifications, but will be effectively the same for different vehicles of the same specification. After this limit, any additional deceleration must be achieved using mechanical braking, and as such, any additional deceleration beyond the limit does not result in any more power being provided to the battery by the regenerative braking system. It is based on this logic that if the obtained acceleration for a given power and speed is greater (taking into account standard deviation) than the maximum expected acceleration, the driver of the vehicle must have used mechanical braking.

As explained above, the monitored vehicle 1b may be the data gathering vehicle 1a. In such embodiments, as shown by arrow 111 in Fig. 3, the data obtained at step 110 during the "function usage" stage 109 may be fed back into the model at step 105 and used to update the power cap function at step 107. It will therefore be understood that whilst "function building" stage 102 and "function usage" stage 109 have been discussed separately for ease of explanation, they are not discrete stages, and the power cap function may be updated and used simultaneously for the same vehicle.

In this example, where the model and power cap function is generated centrally at the remote server, the arrow 111 in Fig. 3 represents the data being sent from the vehicle device 11b of the monitored vehicle 1b in Fig. 2 to the remote server 15 for input to the model. In embodiments where the model is generated at the vehicle device 11a of the data gathering vehicle 1a, and the monitored vehicle is the data gathering vehicle, arrow 111 represents the vehicle device 11a inputting the newly obtained data into the model. In embodiments where the model is generated at the vehicle device 11a of the data gathering vehicle 1a, and the monitored vehicle 1b is not the data gathering vehicle 1b, arrow 111 represents the vehicle device 11b of the monitored vehicle 1b inputting the newly obtained data into a new model which is being generated within the vehicle device 11b. In embodiments, the model (generated with data from a first vehicle, or generated with data from a plurality of vehicles) can be used as a starting point for a model which is then updated with data from a second vehicle.

At step 116, an output is provided based on the determination of whether or not the driver has used mechanical braking at the first time. As shown by arrow 117 in Fig. 3, steps 110 - 116 are performed iteratively throughout a deceleration event such that it is determined whether the driver has used mechanical braking at a plurality of times throughout the deceleration event. Further, as shown by arrow 119 in Fig. 3, steps 108 - 116 are performed iteratively such that that it is determined whether the driver has used mechanical braking at a plurality of times throughout a plurality of different deceleration events.

The outputs provided at step 116 can comprise driver performance data for the driver of the monitored vehicle 1b.

In some examples, the method further comprises analysing the driver performance data and generating a driver score and/or driver advice based on said performance data. The driver score may be indicated to a driver on a driver output device 13, and/or to a fleet manager on a fleet manager output device 19. Driver advice may be indicated to a driver on a driver output device 13.

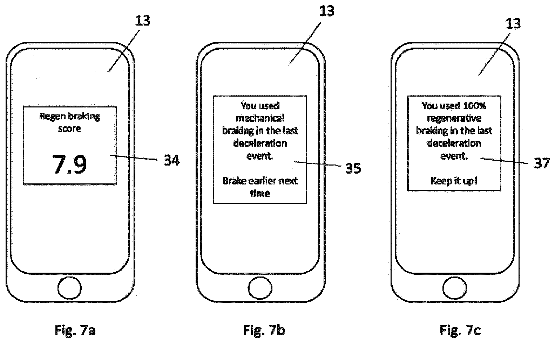

Fig. 7a shows an example of a driver score being indicated to a driver on a driver output device 13 via a message 34.

Fig. 7b shows an example of driver advice being indicated to a driver on a driver output device 13. A message 35 is based on a previous inefficient deceleration event and informs the driver that they used mechanical braking in the last deceleration event and advises them to brake earlier next time.

Fig. 7c shows an example of driver advice being indicated to a driver on a driver output device 13. A message 37 is based on a previous efficient deceleration event in which 100% regenerative braking was used. Message 37 informs the driver of this and advises them to continue to decelerate in this manner.

The driver score shown in message 34 may be calculated in any suitable manner. For example, the driver score is calculated by the data gathering and processing device 11. The method comprises storing driver performance data generated during a time window from a plurality of deceleration events in the memory 8 of the data gathering and processing device 11, analysing the driver performance data with the processor 14, and generating a driver score based on the driver's performance over the time window. In embodiments, the time window is a fixed window comprising a predetermined time period (e.g. 30 days) and the driver's score may reset every 30 days. In other embodiments, the time window is a rolling window comprising a predetermined time period. In embodiments, the time window may be a rolling window of the last 30 days. In embodiments, the time window may not be based on time, and may instead be defined by a predetermined number of most recent trips undertaken by the monitored vehicle 1b, or a predetermined number of the most recently detected deceleration events of the monitored vehicle 1b.

An advantage of defining the rolling window on a predetermined number of trips, or deceleration events may be that the rolling window can be adjusted based on the frequency with which the monitored vehicle 1b is driven, and/or the manner in which the monitored vehicle 1b is driven. If a monitored vehicle 1b is driven very infrequently, a time window based on a fixed time period (e.g. 30 days) may only cover a few trips. Further, if a monitored vehicle 1b is driven infrequently, and usually on long highway journeys, a time window based on a fixed time period (e.g. 30 days) may only cover a small number of deceleration events.

In embodiments, analysing the driver performance data to generate a driver score comprises determining a proportion of deceleration time where mechanical braking is used, and a proportion of deceleration time where only regenerative braking is used. As explained above, in step 114 it is determined at each first time during a deceleration event whether or not mechanical braking is being used. By way of example, if data is obtained at a fixed interval of 100ms, and a deceleration event lasts for 5 seconds, then it is determined at 50 times during the deceleration event whether mechanical braking is being used. If mechanical braking was being used at 10 of the 50 determination times, then the proportion of deceleration time where mechanical braking is used is 20%, and the proportion of deceleration time where only regenerative braking is used is 80%. This may equate to a regenerative braking score for this deceleration event of 8 (out of a possible 10). The above example has been explained in relation to a single deceleration event for ease of understanding, but it will be understood that the same principles can apply when calculating a driver score based on a driver's performance over a time window.

In the above described embodiment, the driver score is determined based on the driver's performance over a time window, whilst the driver advice is given based on only the most recent deceleration event. It will be understood that a driver score could be given for individual deceleration events or for a single trip. Further, it will be understood that driver advice may be provided based on a driver's performance over an entire trip, or over a time period.

In the above described embodiment, the driver performance data is analysed at the data gathering and processing device 11b of the monitored vehicle 1b, using processor 14. In embodiments, the driver performance data may be sent to the remote server 15 and the above described analysis may be performed by a processor 17 of the remote server. Further, in embodiments where driver performance data analysis is performed at the data gathering and processing device 11b of the monitored vehicle 1b, the driver score may be sent to the remote server 15 for further analysis and/or to be sent to a fleet manager output device 19 for output to a fleet manager. In embodiments, a driver may have a driver profile which is stored in the memory 18 of the remote server 15. The driver's profile may comprise that driver's score, and the driver's score may be updated whenever the driver drives a vehicle within the fleet of vehicles.

In embodiments, the processor 17 of the remote server 15 compares the scores of different drivers of vehicles in the fleet. Driver scores may be combined at the remote server 15 to generate a current fleet average score. The processor 17 may then compare an individual driver's score to the fleet average and feedback may be provided to the driver based on this comparison. A message may be sent to a driver output device 13 (via a data gathering and processing device 11) to indicate to the driver that their score is lower than the fleet average, and advice may be provided to the driver (e.g. brake earlier).

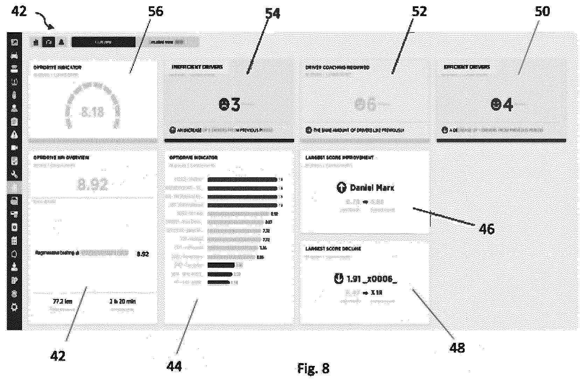

Figure 8 shows a summary page 40 which may be displayed to a fleet manager on a fleet manager output device 19. In output field 42, the current score for a selected driver is shown. In output field 44, the current score of all drivers of monitored vehicles in the fleet is shown. In the embodiment illustrated by summary page 40, the driver scores have been calculated over a fixed period of 30 days (i.e. 1 month), and so in output fields 46 and 48 respectively, the largest score improvement month to month, and the largest score decline month to month are shown. In the illustrated embodiment, drivers are sorted into three categories according to their driver score. Drivers with a score greater than or equal to 9 are classed as efficient drivers. The number of efficient drivers is shown in output field 50. Drivers with a score which is greater than 5, but lower than 9 are classed as drivers who require coaching. The number of drivers who require coaching is shown in output field 52. Drivers with a score which is less than or equal to 5 are classed as inefficient drivers. The number of inefficient drivers is shown in output field 54. The fleet average driver score is shown in output field 56.

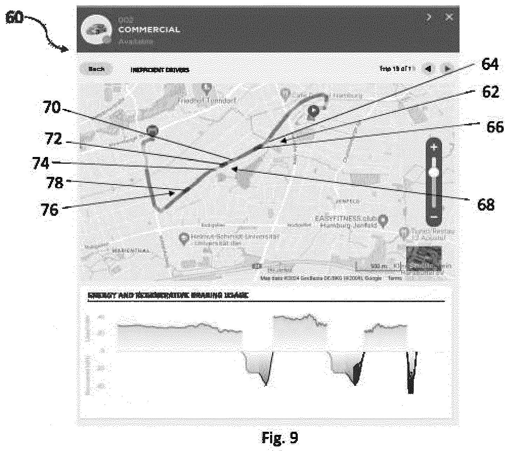

Fig. 9 shows a display 60 which may be provided to a driver on a driver output device 13, and/or to a fleet manager on a fleet manager output device 19. The display 60 illustrates driver performance data which is obtained using a variant of the method 100 discussed in relation to Fig. 3. In said variant, the monitored vehicle 1b is equipped with a location determining device (e.g. a GPS device) which may be integral to the data gathering and processing device 11. When the data obtained at the first time is time stamped, it is also location stamped based on location information which is obtained from the location determining device. As such, in step 116, the output provides driver performance data which indicates whether the driver was using mechanical braking at the first time, and at the first location corresponding to the first time. Since the driver performance data comprises location information, the driver performance data can be provided as an overlay on a section of an electronic map, where a route of the monitored vehicle is plotted, and periods of deceleration which include mechanical braking are illustrated along the route.

Three clear deceleration events are shown in the display 60. The first deceleration event 62 first comprises a period of total regenerative braking which is illustrated by the light shade (green) 64, followed by a period where mechanical braking is used which is illustrated by the dark shade (grey) 66. The second deceleration event 68 first comprises a period of total regenerative braking which is illustrated by the light shade (green) 70, followed by a period where mechanical braking is used which is illustrated by the dark shade (grey) 72, followed by another period of total regenerative braking 74. The third deceleration event 76 only comprises a period where mechanical braking is used which is illustrated by the dark shade (grey) 78. By displaying the driver performance data in this way, a driver and/or fleet manager may be able to recognise specific areas of a driver's performance which are inefficient. For example, displaying driver performance data as an overlay on a section of an electronic map may help a driver and/or fleet manager to recognise that the driver usually uses mechanical braking when approaching road features such as junctions. The fleet manager may therefore advise the driver that they need to anticipate more. In embodiments, the method may comprise analysing the driver performance data in view of the associated location data such that these trends can be recognised automatically, and advice can be provided to a driver via a driver output device 13 (e.g. Look ahead and anticipate junctions to improve braking efficiency).

In the method 100 discussed above, the power cap function is used to determine, at a first time, whether the driver of the monitored vehicle 1b has used mechanical braking. However, the power cap function which is generated in the "function building" stage 102 can be used to assess and/or advise a driver in ways other than determining whether or not mechanical braking has been used. Two such additional/alternative function uses are described below.

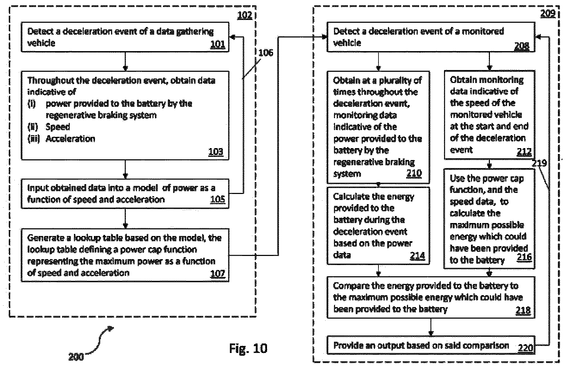

Fig. 10 illustrates a method 200 which is a variant of the method 100 having a different use of the power cap function. The "function building stage" 102 is identical to that of method 100, but method 200 comprises a different "function usage" stage 209. At step 208 a deceleration event of a monitored vehicle is detected. In embodiments, a deceleration event may be detected using an acceleration sensor which is comprised in the monitored vehicle 1, (e.g. in the data gathering and processing device 11). For example, a deceleration event may be detected using data indicative of speed, which may be obtained from and OBD or CAN port of the monitored vehicle 1. For example, the beginning of a deceleration event may be detected by determining that the vehicle speed has decreased over two or more consecutive vehicle speed readings, and the end of a deceleration event may be detected by determining that the vehicle speed has increased, or has remained constant over two or more consecutive vehicle speed readings.

At step 210, during the detected deceleration event, monitoring data is obtained at a plurality of times which is indicative of a power provided to the battery by the regenerative braking system of the monitored vehicle.

The monitoring data may be obtained from any suitable source. For example, the power is derived from data obtained by the data gathering and processing device 11 from OBD/CAN/FMS data from the monitored vehicle 1. For example, the power is derived using voltage and current data obtained by the data gathering and processing device 11 from the OBD/CAN/FMS data according to $P=VI$.

The obtained monitoring data is time stamped by the data gathering and processing device 11. In embodiments, a single time stamp may be applied to any data obtained within a time window centred on the time stamp value. Such that data which was obtained close to the first time is considered to have been obtained at the first time. For example, any monitoring data obtained between t=50ms and t=149ms may be given the time stamp t=100ms, any data obtained between t=150ms and t=249ms may be given the time stamp t=200ms, etc.

At step 212, monitoring data indicative of the speed of the monitored vehicle at the start of the deceleration event, and at the end of the deceleration event is obtained For example, the speed data is directly obtained by the data gathering and processing device 11 from OBD/CAN/FMS data from the monitored 1. For example, the speed data is derived from GPS readings taken from a GPS device (not shown) located in the vehicle 1.

At step 214, the monitoring data indicative of the power provided to the battery by the regenerative braking system is used to calculate the total energy transferred to the battery by the regenerative braking system during the deceleration event (e.g. by integrating the power data with respect to time).

At step 216, the previously generated power cap function, and the speed data, are used to calculate the maximum possible energy which could have been provided to the battery during the deceleration event if the deceleration event was performed using 100% regenerative braking.

At step 218, the actual energy provided to the battery during the deceleration event (as calculated using the power data) is compared to the maximum possible energy which could have been provided to the battery, and at step 220, an output is provided based on this comparison.

As shown by arrow 219, steps 208 - 220 are performed iteratively such that the comparison of actual energy provided to the battery with maximum possible energy which could have been provided is performed for a plurality of different deceleration events.

The outputs provided in step 220 can comprise driver performance data for the driver of the monitored vehicle. Any of the discussion of analysis of driver performance data provided above in relation to method 100 is applicable also to the driver performance data output by method 200. For example, driver scores may be generated based on the difference between the total energy provided to the battery, and the maximum possible energy (e.g. over a rolling time window). Further, driver advice may be provided based on the difference between the total energy provided to the battery, and the maximum possible energy.

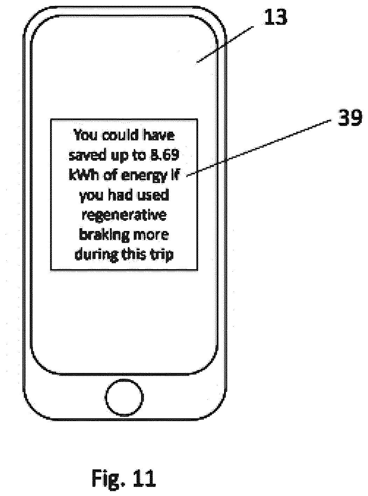

Fig. 11 shows an example of driver advice contained in message 39 on driver output device 13. Message 39 may be provided to the driver as part of a summary at the end of each trip and explains how much recovered energy the driver missed out on as a result of using mechanical braking.

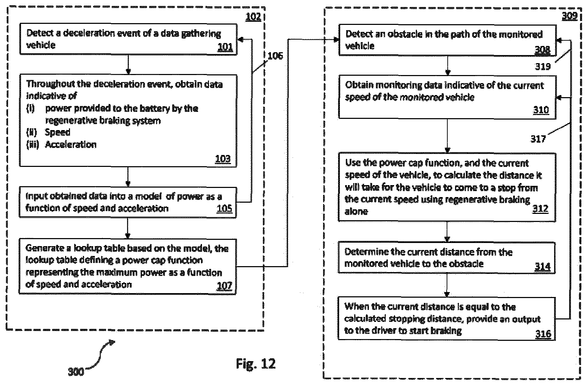

Fig. 12 illustrates a method 300 which is a variant of the method 100 having a different use of the power cap function. The "function building" stage 102 is identical to that of method 100, but method 300 comprises a different "function usage" stage 309. At step 308, an obstacle is detected in the path of the monitored vehicle 1b. An obstacle could be anything which will require the vehicle to slow down, or to come to a stop. For example, an obstacle could be an obstruction such as another vehicle, a traffic signal, a junction, etc. The obstacle may be detected in any known way. In embodiments, the monitored vehicle may comprise an obstacle recognition system such as a RADAR obstacle detection system or a LIDAR obstacle detection system. Such systems may be able to detect obstructions such as other vehicles. In embodiments, the obstacle may be detected using map data and current location data (e.g. GPS data). In such examples, map data and current location data may be used to recognise that the vehicle is approaching a road feature such as a junction or stop sign where the vehicle will need to stop.

At step 310, monitoring data indicative of the current speed of the monitored vehicle is obtained. For example, the speed data is directly obtained by the data gathering and processing device 11 from OBD/CAN/FMS data from the monitored vehicle 1b. For example, the speed data is derived from GPS readings taken from a GPS device (not shown) located in the vehicle 1.

At step 312, the previously generated power cap function, and the current speed of the monitored vehicle 1b, are used to calculate the distance it will take for the vehicle 1b to reach a target speed (which may be v=0 corresponding to the vehicle coming to a complete stop) using regenerative braking alone. This calculation is made as follows.

In Fig. 5 and Fig. 6, the line 33 corresponds to the maximum deceleration which can be achieved for each speed using regenerative braking alone. This line therefore represents this maximum acceleration as a function of vehicle speed:

$$a = f\left(v\right)$$

The braking distance can be calculated by using the following set of differential equations:

$$\begin{cases} \dfrac{dv}{dt} = a \\ \dfrac{dx}{dt} = v \end{cases} \qquad \begin{cases} \dfrac{dv}{dt} = a \\ \dfrac{dx}{dt} = v \\ \dfrac{dE}{dt} = P \end{cases}$$

A solution for the braking distance can be derived from these equations using principles that are known from textbooks. In embodiments, this solution can be approximated. As such, in embodiments, the braking distance can be calculated according to:

$$x = \int_{v_1}^{v_2} \frac{v}{a(v)} \, dv \approx \sum_{i=0}^{n-1} \frac{v_i^2 - v_{i+1}^2}{\dfrac{a_i^2 + a_{i+1}^2}{2}}$$

Where $v_1$ is equal to the initial vehicle speed, and $v_2$ is equal to the target vehicle speed.

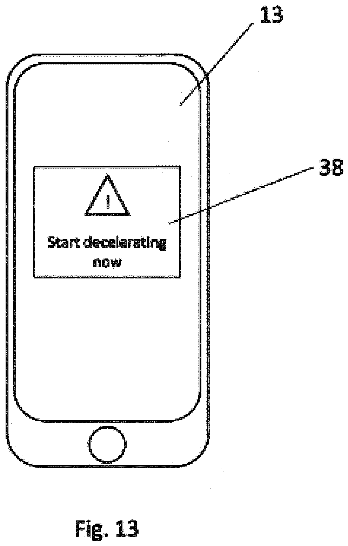

At step 314, the current distance from the monitored vehicle to the obstacle is determined. This distance can be determined in the same way that the obstacle was recognised (e.g. using RADAR, LIDAR, or a combination of map data and location data). At step 316, when the current distance is equal to the calculated braking distance, an output is provided to the driver (e.g. via driver output device 13) to start decelerating. An example of such an output (message 38) is illustrated in Fig. 13. As shown by arrow 317, steps 310 to 316 are performed iteratively until the braking distance is reached. As shown by arrow 319, steps 308 to 316 are performed for every detected obstacle.

It will be understood that in more complex embodiments, the method may comprise detecting obstacles which do not require the vehicle to come to a stop, but do require the vehicle to decelerate (e.g. corners in the road). The method may comprise calculating a safe speed at which the vehicle needs to be travelling when it reaches the obstacle, and to set this speed (and not v=0) as the target speed in step 212.

**Claims**

1. A computer-implemented method of assessing and/or advising a driver of an electric or hybrid vehicle within a fleet comprising one or more vehicles, each of the one or more vehicles including a battery for powering an electrical drive unit, a mechanical braking system, and a regenerative braking system configured to recover energy and provide power to the battery, the method comprising:

   detecting a series of deceleration events of a data gathering vehicle within the one or more vehicles;
   during each detected deceleration event, obtaining, at a plurality of times during the deceleration event, data indicative of:

   (i) a power provided to the battery by the regenerative braking system of the data gathering vehicle;
   (ii) a speed of the data gathering vehicle; and
   (iii) an acceleration of the data gathering vehicle; and

   time stamping the obtained data;
   generating a function for the one or more vehicles within the fleet based on the data obtained during the series of deceleration events of the data gathering vehicle, the function representing a relationship between the power provided to the battery by the regenerative braking system, the speed, and the acceleration;
   detecting a deceleration event of a monitored vehicle within the one or more vehicles;

obtaining, at a first time during said deceleration event, monitoring data indicative of:

(i) a power provided to the battery by the regenerative braking system of the monitored vehicle;
(ii) a speed of the monitored vehicle; and
(iii) an acceleration of the monitored vehicle; and

time stamping said monitoring data; and
using the generated function, and the time stamped monitoring data obtained during said deceleration event, to determine whether a driver of the monitored vehicle has used mechanical braking at the first time corresponding to the time stamping, and providing an output based on said determination.

2. The computer-implemented method of claim 1, wherein the one or more vehicles are vehicles having the same vehicle specification, wherein the generated function is a function for the given vehicle specification.

3. The computer-implemented method of claim 1 or claim 2, wherein the series of deceleration events are obtained in a rolling window comprising one or more of:

(i) a predetermined number of the most recently detected deceleration events
(ii) a predetermined number of most recent trips undertaken by the data gathering vehicle;
(iii) a predetermined time period.

4. The computer-implemented method of any preceding claim, wherein the function comprises a look-up table comprising corresponding values of power provided to the battery, speed, and acceleration of the data gathering vehicle.

5. The computer-implemented method of any preceding claim, comprising sending the generated function to a remote server, and the remote server using the generated function to determine whether a driver of a monitored vehicle within the fleet which is different to the data gathering vehicle has used mechanical braking during a given deceleration event and providing an output based on said determination.

6. The method of any preceding claim, comprising:

using the generated function, and the time stamped monitoring data obtained at the first time during the deceleration event, to determine an expected acceleration value at the first time, corresponding to the acceleration which could be achieved using the regenerative braking system alone, based on the power and speed measurements having time stamps corresponding to the first time;
comparing the magnitude of the obtained acceleration having a time stamp corresponding to the first time to the magnitude of the expected acceleration value; and
determining that the monitored vehicle has used mechanical braking at the first time if the magnitude of the obtained acceleration is greater than the magnitude of the expected acceleration value by a predetermined amount;
and providing an output based on said determination.

7. The computer-implemented method of any preceding claim, wherein the output comprises driver performance data for the driver of the monitored vehicle, the method comprising analysing the driver performance data and generating a driver score and/or driver advice based on said performance data.

8. The computer-implemented method of claim 7, comprising storing driver performance data generated during a time window from a plurality of deceleration events in a memory, analysing the driver performance data, and generating a driver score and/or driver advice based on said driver performance data, wherein the driver score and/or driver advice is based on the driver's performance over the time window.

9. The computer-implemented method of claim 8, wherein the time window is a rolling window comprising one or more of:

(i) a predetermined time period;
(ii) a predetermined number of most recent trips undertaken by the monitored vehicle;
(iii) a predetermined number of the most recently detected deceleration events.

10. The computer-implemented method of any one of claims 7 to 9, wherein analysing the driver performance data comprises determining a proportion of deceleration time where mechanical braking is used, and a proportion of deceleration time where only regenerative braking is used.

11. The computer-implemented method of any one of claims 7 to 10, comprising providing the driver performance data and/or driver score and/or advice to the driver via a driver output device and/or comprising providing the driver performance data and/or driver score to a fleet manager via a fleet manager output device.

12. The computer-implemented method of claim 11, wherein the driver performance data and/or driver score and/or advice to the driver is provided as an overlay on a section of an electronic map corresponding to a location to which the driver performance data relates.

13. The computer-implemented method of any preceding claim, comprising:

    obtaining, at a plurality of times during a deceleration event of a monitored vehicle within the fleet, data indicative of a power provided to the battery by the regenerative braking system of the monitored vehicle;
    obtaining, at the start and the end of the deceleration event, data indicative of a speed of the monitored vehicle;
    calculating the energy recovered by the regenerative braking system during the deceleration event using the data indicative of the power provided to the battery by the regenerative braking system of the monitored vehicle;
    calculating a maximum possible energy which could have been provided to the battery by the regenerative braking system during the deceleration event using the generated function, and the data indicative of the speed of the monitored vehicle;
    comparing the maximum possible energy to the energy recovered during the deceleration event; and
    providing an output based on said comparison.

14. The computer-implemented method of any preceding claim, comprising:

    detecting an obstacle in a path of the monitored vehicle;
    obtaining data indicative of a current speed of the monitored vehicle;
    calculating, using the generated function and the data indicative of the current speed of the monitored vehicle, a minimum distance from the obstacle by which the monitored vehicle must start decelerating in order to reach a desired speed at the obstacle without using mechanical braking; and
    outputting an instruction to the driver of the monitored vehicle to start decelerating when the minimum distance is reached.

15. A system for assessing and/or advising a driver of an electric or hybrid vehicle within a fleet comprising one or more vehicles, each of the one or more vehicles including a battery for powering an electrical drive unit, a mechanical braking system, and a regenerative braking system configured to recover energy and provide power to the battery, the system comprising:

    (i) a device installed in a data gathering vehicle within the one or more vehicles, configured to:

        detect a series of deceleration events of the data gathering vehicle;
        during each detected deceleration event, obtain, at a plurality of times during the deceleration event, data indicative of:

            (i) a power provided to the battery by the regenerative braking system of the data gathering vehicle;
            (ii) a speed of the data gathering vehicle;
            (iii) an acceleration of the data gathering vehicle; and

        time stamp the obtained data;

    (ii) one or more processors configured to:
    generate a function for the one or more vehicles within the fleet based on the data obtained during the series of deceleration events of the data monitoring vehicle, the function representing a relationship between the power provided to the battery by the regenerative braking system, the speed, and the acceleration; and
    (iii) a device installed in a monitored vehicle within the one or more vehicles, configured to:

detect a deceleration event of the monitored vehicle;
obtain, at a first time during said deceleration event, monitoring data indicative of:

(i) a power provided to the battery by the regenerative braking system of the monitored vehicle;
(ii) a speed of the monitored vehicle; and
(iii) an acceleration of the monitored vehicle; and

time stamp the obtained monitoring data; and

(iv) one or more processors configured to: use the generated function, and the time stamped monitoring data obtained at the first time during said deceleration event, to determine whether a driver of the monitored vehicle has used mechanical braking at the first time; and provide an output based on said determination.

Fig. 1

Fig. 2

**102**

Detect a deceleration event of a data gathering vehicle **101**

↓

Throughout the deceleration event, obtain data indicative of
(i) power provided to the battery by the regenerative braking system
(ii) Speed
(iii) Acceleration
**103**

↓

Input obtained data into a model of power as a function of speed and acceleration **105**

↓

Generate a lookup table based on the model, the lookup table defining a power cap function representing the maximum power as a function of speed and acceleration **107**

**100**

**Fig. 3**

**109**

Detect a deceleration event of a monitored vehicle **108**

↓

Obtain at a first time during the deceleration event, monitoring data indicative of
(i) power provided to the battery by the regenerative braking system
(ii) Speed
(iii) Acceleration
**110**

↓

Input the monitoring data indicative of power and speed into the power cap function. The function will output an expected acceleration value as well as its σ value at the first time **112**

↓

Compare the expected acceleration value with the obtained acceleration value to determine whether the driver has used mechanical braking at the first time **114**

↓

Provide an output based on said determination **116**

106

111

119

117

13

Initial Data
Gathering

Power cap
function not yet
ready for use

31

Fig. 4

Fig. 5

Fig. 6

Fig. 7a          Fig. 7b          Fig. 7c

Fig. 8

Fig. 9

Detect a deceleration event of a data gathering vehicle                    101

↓

Throughout the deceleration event, obtain data indicative of
(i)  power provided to the battery by the regenerative braking system
(ii) Speed
(iii) Acceleration                                                          103

↓

Input obtained data into a model of power as a function of speed and acceleration                                                               105

↓

Generate a lookup table based on the model, the lookup table defining a power cap function representing the maximum power as a function of speed and acceleration                                                          107

102

106

Detect a deceleration event of a monitored vehicle                          208                                                                      209

↓

Obtain at a plurality of times throughout the deceleration event, monitoring data indicative of the power provided to the battery by the regenerative braking system     210

Obtain monitoring data indicative of the speed of the monitored vehicle at the start and end of the deceleration event                              212

↓

Calculate the energy provided to the battery during the deceleration event based on the power data                                                     214

Use the power cap function, and the speed data, to calculate the maximum possible energy which could have been provided to the battery     216     219

↓

Compare the energy provided to the battery to the maximum possible energy which could have been provided to the battery                       218

↓

Provide an output based on said comparison     220

200

**Fig. 10**

28

13

39

You could have saved up to 8.69 kWh of energy if you had used regenerative braking more during this trip

Fig. 11

**102**

Detect a deceleration event of a data gathering vehicle **101**

Throughout the deceleration event, obtain data indicative of
(i) power provided to the battery by the regenerative braking system
(ii) Speed
(iii) Acceleration
**103**

Input obtained data into a model of power as a function of speed and acceleration **105**

Generate a lookup table based on the model, the lookup table defining a power cap function representing the maximum power as a function of speed and acceleration **107**

**106**

**309**

Detect an obstacle in the path of the monitored vehicle **308**

**319**

Obtain monitoring data indicative of the current speed of the monitored vehicle **310**

**317**

Use the power cap function, and the current speed of the vehicle, to calculate the distance it will take for the vehicle to come to a stop from the current speed using regenerative braking alone **312**

Determine the current distance from the monitored vehicle to the obstacle **314**

When the current distance is equal to the calculated stopping distance, provide an output to the driver to start braking **316**

**300**

Fig. 12

Fig. 13

Europäisches
Patentamt

European
Patent Office

Office européen
des brevets

# EUROPEAN SEARCH REPORT

**Application Number**

EP 24 38 2625

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/023817 A1 (O'MEACHAIR DEAGLAN [GB] ET AL) 23 January 2020 (2020-01-23) | 1-6, 13-15 | INV.<br>B60L7/10 |
| Y | * paragraph [0004] *<br>* paragraph [0006] - paragraph [0007] *<br>* paragraph [0049]; figure 1 *<br>* paragraph [0086] - paragraph [0098] *<br>* paragraph [0075]; figure 5 *<br>* paragraph [0079] *<br>* paragraph [0081]; figure 2 *<br>----- | 7-12 | B60L7/26 |
| Y | US 2012/179347 A1 (ALDIGHIERI PAUL [US] ET AL) 12 July 2012 (2012-07-12)<br>* paragraph [0002] *<br>* paragraph [0005] - paragraph [0012] *<br>* paragraph [0038] - paragraph [0039] *<br>* paragraph [0046] - paragraph [0053]; figures 3-8 *<br>----- | 7-12 | |

**TECHNICAL FIELDS SEARCHED (IPC)**

B60L
B60W

The present search report has been drawn up for all claims

| Place of search | Date of completion of the search | Examiner |
|---|---|---|
| The Hague | 14 November 2024 | Benedetti, Gabriele |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
...............................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 24 38 2625

This annex lists the patent family members relating to the patent documents cited in the above-mentioned European search report.
The members are as contained in the European Patent Office EDP file on
The European Patent Office is in no way liable for these particulars which are merely given for the purpose of information.

14-11-2024

| Patent document cited in search report | Publication date | Patent family member(s) | | Publication date |
|---|---|---|---|---|
| US 2020023817 A1 | 23-01-2020 | CN | 110546028 A | 06-12-2019 |
| | | EP | 3576976 A1 | 11-12-2019 |
| | | GB | 2559376 A | 08-08-2018 |
| | | JP | 7227142 B2 | 21-02-2023 |
| | | JP | 2020507507 A | 12-03-2020 |
| | | US | 2020023817 A1 | 23-01-2020 |
| | | WO | 2018142104 A1 | 09-08-2018 |
| US 2012179347 A1 | 12-07-2012 | CN | 103930296 A | 16-07-2014 |
| | | EP | 2661387 A2 | 13-11-2013 |
| | | US | 2012179346 A1 | 12-07-2012 |
| | | US | 2012179347 A1 | 12-07-2012 |
| | | WO | 2012094590 A2 | 12-07-2012 |

For more details about this annex : see Official Journal of the European Patent Office, No. 12/82